# EUROPEAN PATENT APPLICATION

(11) **EP 1 213 665 A2**
(43) Date of publication of application: **12.06.2002**
(21) Application number: 01129113.5
(22) Date of filing: 07.12.2001
(51) Int. Cl.: G06F 17/30

(54) **Patent classification displaying method and apparatus**

(30) Priority: 07.12.2000 JP 2000372401
(71) Applicant: Patentmall Limited, Kodaira-shi, Tokyo 187-0032 (JP); Derwent Information Limited, London WC2B 5DF (GB)
(72) Inventor: Ohga, Akihiro, Kodaira-shi, Tokyo 187-0032 (JP)
(74) Representative: Grünecker, Kinkeldey, Stockmair & Schwanhäusser Anwaltssozietät

(57) **Abstract**

There is provided a method for displaying the classification of a patent document to which multi-viewpoint patent classifications are added. The method makes it possible to grasp the patent document from a variety of viewpoints more than those obtained from the "Abstract" of the patent document without reading the specification, and hence improve the efficiency of patent research. The method comprises the steps of: (a) retrieving multi-viewpoint patent classifications added to the patent document; (b) using a database storing a multi-viewpoint patent classification table to read out multi-viewpoint patent classifications higher in hierarchy than each of the multi-viewpoint patent classifications retrieved; and (c) displaying, together with their titles, at least either the multi-viewpoint patent classifications retrieved or the higher levels of hierarchy. Each of the multi-viewpoint patent classifications includes theme codes, viewpoints and sub-devided viewpoints so that the theme codes and/or the viewpoints of the multi-viewpoint patent classifications added to the patent document may be listed and output in the descending order of the frequency of their occurrence.

## Description

### FIELD OF THE INVENTION

The present invention relates to a patent classification displaying method and apparatus, a recording medium and a program, all of which are used to make it possible to grasp the contents of a patent document from multi-viewpoint patent classifications like F-terms added to the patent document.

### BACKGROUND OF THE INVENTION

Search based on F-terms that classify a patent document according to from multi-viewpoints is one of effective means for patent document search.

F-terms (File Forming Terms) have been developed in Japan to cope with recent technological development characterized by remarkable expansion in document volumes, composition and merging of technologies, and product diversification. F-terms are technical terms designed for machine retrieval in order to improve the efficiency of prior art search for patent examination. The current international patent classification (IPC) is mainly expanded from the viewpoint of discrete technology, and its technical segmentation is not very detailed. For this reason, search based only on IPC usually brings about hundreds and thousands of prior art documents. F-terms re-classify or further segment each specific technical field of IPC from a variety of viewpoints (i.e., objective, application, structure, material, manufacturing process, processing and operation method, control method, etc.). Combining F-terms with IPC effectively narrows down relevant documents in prior art search.

An F-term consists of a 5-digit theme code + a 2-digit viewpoint symbol + a 2-digit number. Theme codes, however, are ordinarily displayed separately, so an F-term usually consists of a 2-digit viewpoint symbol + a 2-digit number (the first 5 digits are omitted).

In some cases, a hundred or more classifications (F-terms) may be added to one patent document depending on the number of technical subjects of the patent document. F-terms have been added to almost all the Japanese Unexamined Patent Publications issued on and after January 1, 2000. F-terms indicated on the patent documents laid-open before the above-mentioned date can also be known, for example, by accessing an "FI/F-term Search" database at the "forth service menu for Patent and Utility Model" in the Japan Patent Office's IPDL (Industrial Property Digital Library).

However, the classification codes (symbols) are just listed in a patent document at random, which fails to tell what contents (titles) of classifications are given. Although F-term search will be effective as means for document search if the contents (titles) of the classifications are known, F-term codes added to a patent document are just listed at random, telling nothing about the contents of the document.

### SUMMARY OF THE INVENTION

It is the first object of the present invention to solve the above-mentioned conventional disadvantage and provide a method for displaying the classification of a patent document in a manner suitable to improve the efficiency of patent search. The method makes it possible to grasp the patent document from a variety of viewpoints more than from the "Abstract" of the patent document without reading the specification.

It is the second object of the present invention to provide a patent classification displaying apparatus directly used to implement the above-mentioned method. It is the third object of the present invention to provide a recording medium for storing such a program as to enable a computer to execute the above-mentioned method is stored. It is the fourth object of the present invention to provide such a program as to enable a computer to execute the method.

According to the present invention, the first object is attained by the provision of a method for displaying the classification of a patent document to which multi-viewpoint patent classifications are added. The method comprises the steps of: (a) retrieving the multi-viewpoint patent classifications added to the patent document; (b) using a database storing a multi-viewpoint patent classification table to read out multi-viewpoint patent classifications higher in hierarchy than each of the multi-viewpoint patent classifications retrieved; and (c) displaying, together with their titles, at least either the multi-viewpoint patent classifications retrieved or the multi-viewpoint patent classifications higher in hierarchy than each of the multi-viewpoint patent classifications retrieved.

The display of the multi-viewpoint patent classifications may be made by listing and displaying theme codes of each of the multi-viewpoint patent classifications together with their titles in the descending order of the frequency of occurrence of the theme codes. Viewpoints of each of the theme codes may also be listed and output together with their titles in the descending order of the frequency of occurrence of the viewpoints.

The second object of the present invention is attained by the provision of an apparatus for displaying the classification of a patent document to which multi-viewpoint patent classifications are added. The apparatus includes a multi-viewpoint patent classification database storing a multi-viewpoint classification table, a patent document database storing the patent document to which the multi-viewpoint patent classifications are added, input means, display means and a CPU. The CPU comprises: document retrieval means for retrieving the patent document in accordance with instructions from the input means to control document-specific classification storing means to store the multi-viewpoint patent classifications added to the patent document retrieved; classification retrieval means for reading out, together with their titles, the multi-viewpoint patent classifications added to the patent document retrieved and higher levels of hierarchy to control classification storing means to store the read data; hierarchy of classification determining means for determining the level of each of the multi-viewpoint patent classifications added to the patent document; and control means for controlling the entire operation while controlling the display means to display, together with their titles, at least either the multi-viewpoint patent classifications added to the patent document or the higher levels of hierarchy obtained by the hierarchy of classification determining means.

In this case, theme code counting means may be provided for listing theme codes of each of the multi-viewpoint patent classifications, which has been read out by the classification retrieval means, in the descending order of the frequency of occurrence of the theme codes. Viewpoint counting means may also be provided for listing viewpoints of each of the theme codes in the descending order of the frequency of occurrence of the viewpoints. The provision of the above-mentioned means has the advantage of being capable of displaying the theme codes and/or the viewpoints in the descending order of their occurrence.

The third object of the present invention is attained by the provision of a recording medium for storing such a program as to enable a computer to execute the method above described.

The fourth object of the present invention is attained by the provision of a program for enabling a computer to execute the method above described.

### BRIEF DESCRIPTION OF THE DRAWINGS

Fig. 1 is a block diagram showing the structure of an apparatus for executinq a method according to an embodiment of the present invention;
Fig. 2 is a flowchart showing the operation of the embodiment;
Fig. 3 shows an example of an output display screen made by the multi-viewpoint patent classification method according to the present invention;
Fig. 4 shows another example of the output display screen;
Fig. 5 is still another example of the output display screen;
Fig. 6 is yet another example of the output display screen; and
Fig. 7 is the other example of the output display screen.

### DESCRIPTION OF THE PREFERRED EMBODIMENT

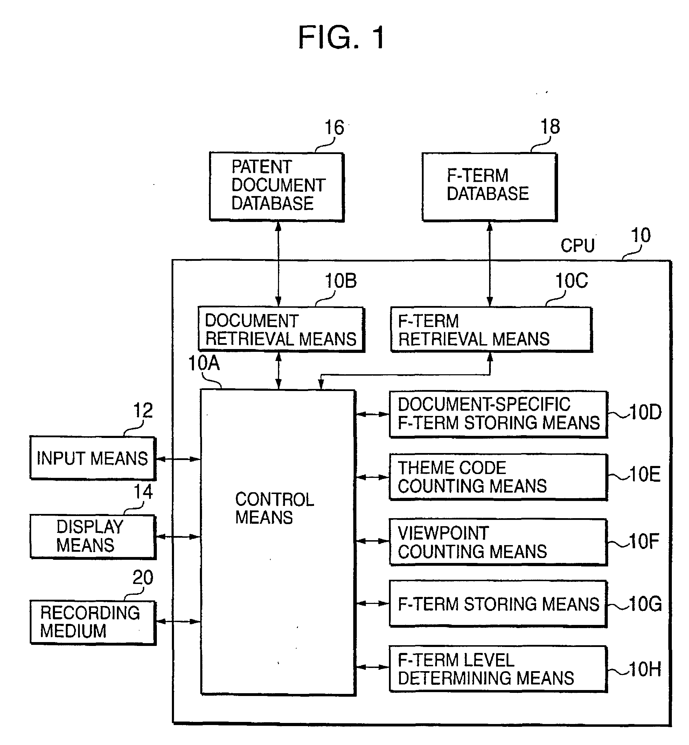

Referring first to Fig. 1, the structure of the apparatus will be described. The apparatus includes a CPU (computer) 10, input means 12 and display means 14. The CPU 10 is connected to data storing means such as a patent document database 16 and F-term database 18. The input means 12 and the display means 14 may be located at a distance location from which they can be connected to the apparatus through a communication line or the like. The reference numeral 20 designates a recording medium on which a program for operating the CPU 10 and other programs or information are recorded.

The CPU 10 carries out several kinds of operations according to the control program recorded on the recording medium 20. The operational features are indicated here as control means 10A, document retrieval means 10B, F-term retrieval means (classification retrieval means) 10C, document-specific F-term storing means (document-specific classification storing means) 10D, theme code counting means 10E, viewpoint counting means 10F, F-term storing means (classification storing means) 10G, and F-term level determining means (hierarchy of classification determining means) 10H. The control program may be recorded on the external recording medium 20 or in an internal memory such as a hard disk.

The control means 10A controls each of the means to be described below on the basis of the control program. The document retrieval means 10B can search the patent document database 16 from various retrieval items. For example, an application or patent number, or a query or retrieval expression may be input from the input means 12, which allows the document retrieval means 10B to read a patent document corresponding to the number or retrieval expression from the patent document database 16. F-term retrieval means 10C can search the F-term database 18 from theme codes or the like.

The document-specific F-term storing means 10D fetches F-term data (usually 9-digit data or 10-digit data if an additional code is given) added to the patent document selected (read-out) and temporarily stores the same. The F-term data is usually 9-digit data like [5F045AD09] consisting of the first 5-digit theme code [5F045] and the latter four-digit F-term [AD09]. In the F-term [AD09], the first [AD] is a 2-digit viewpoint symbol. The latter 2-digit [09] is a symbol of subdivision of the viewpoint.

The theme code counting means 10E counts first 5-digit theme codes of each of the 9-digit F-term data fetched from the patent document concerned so that the first 5-digit theme codes will be displayed sequentially from the most frequently appearing theme code. The viewpoint counting means 10F counts viewpoints (each consisting of two-digit alphabetic letters corresponding to the sixth and seventh digits from the top of the 9-digit F-term) of a theme code specified by an operator from all the displayed theme codes so that the viewpoints will be displayed sequentially from the most frequently appearing viewpoint.

The F-term storing means 10G reads information on the specified theme code from the F-term database 18 and temporarily stores the read information. The information is mainly used to display respective titles of the theme code, the viewpoints and the F-terms to be displayed. The F-term level determining means 10H determines the level of each F-term so that when the F-terms are displayed, F-terms higher in hierarchy than the F-terms concerned will also be displayed together with the lower F-terms at the same time.

The input means 12 is formed of a keyboard, a mouse and the like, and used to input a retrieval expression, select a patent document, a theme code, a viewpoint or the like from the displayed items, and specify one of various display screens or switch over between the display screens. The display means 14 is a CRT or liquid crystal display unit or other type of display unit. The display means 14 displays not only the bibliographic items, abstract and drawings of the patent document concerned, but also data according to the present invention. The data according to the present invention include a list of theme codes listed in the descending order of frequency, a list of viewpoints listed in the descending order of frequency, and a list of F-terms (concerned F-term(s) as well as their upper-level F-terms), all of which are displayed in a specified form or in the form of windows.

The patent document database 16 stores the bibliographic items, abstract, drawings and the like, of each patent document, and in this case, at least the document number and added F-term data are need storing. The F-term database 18 essentially stores the "F-term List" and preferably contains the "F-term Explanation."

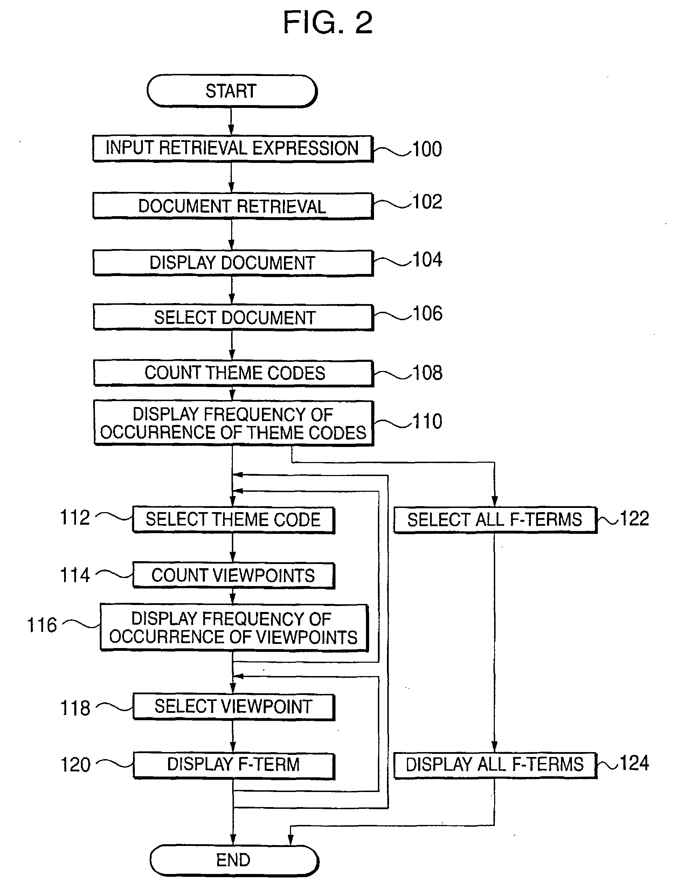

Referring next to Fig. 2, a method for displaying the multi-viewpoints classification of a patent document on the basis of retrieval expression search will be described. First, the operator inputs a retrieval expression or the like using the input means 12 (step 100 in Fig. 2). Upon receipt of the retrieval expression or the like, the control means 10A searches patent documents from the patent document database 16 through the document retrieval means 10B (step 102). As a result of searching, the control means 10A controls the display unit 14 to display all the patent documents searched (step 104). Information to be displayed here is preset information on each patent document such as the document number, the title of the invention, F-term data, the various bibliographic items, the abstract and other data.

When the operator selects an interesting one of the displayed patent documents by clicking or the like (step 106), the document-specific F-term storing means 10D fetches F-term data (9-digit alphabetic letters and numbers) on the selected patent document and temporarily stores the same. Then the theme code counting means 10E counts first 5-digit theme codes of each of the 9-digit F-term data so that the theme codes will be displayed sequentially from the most frequently appearing theme code (step 108). Simultaneously, the control means 10A reads information including the titles of the F-terms added to the patent document from the F-term database 18 through the F-term retrieval means 10C, and controls the F-term storing means 10G to temporarily store the read information.

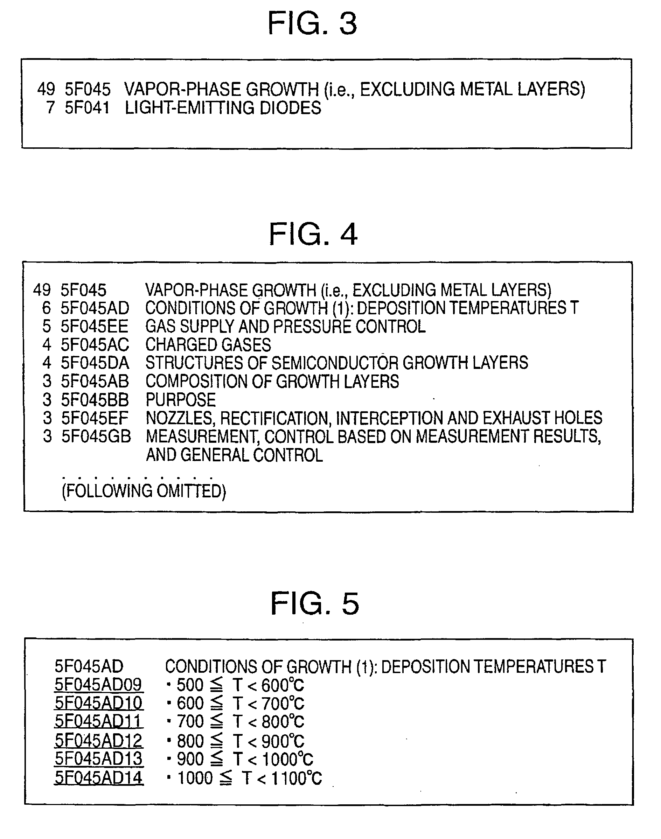

The control means 10A controls the display means 14 to display not only the count values and the theme codes sequentially from the largest count value obtained in step 108, but also corresponding titles of the theme codes sequentially from the most frequently appearing theme code by reading all the titles from the F-term storing means 10G and merging the same with the theme codes (step 110). Fig. 3 shows an example of 5-digit theme codes displayed in the descending order of the frequency of occurrence of the theme codes. As shown in Fig. 3, the theme codes listed in the descending order of the frequency of their occurrence are displayed on part of the display screen.

Shown in Fig. 3 is the display of specific data taken as an example from Japanese Unexamined Patent Publication No. Hei 06-196757. This Patent Publication discloses the invention entitled "Method of Growing Indium Gallium Nitride Semiconductor" with a total of 56 F-terms listed therein. In other words, Fig. 3 indicates that 49 F-terms related to the theme code 5F045 and seven F-terms related to the theme code 5F041 are added to the patent document. The following is the "Abstract" of the patent document:
"[Purpose] To provide a method of growing an indium gallium nitride (InGaN) semiconductor having high quality and excellent crystallizability. [Constitution] Using gallium gas, indium gas and nitride gas as material gases, and nitrogen as a carrier gas, an InGaN layer is grown on a gallium nitride layer at a temperature of higher than 600°C."

When the operator selects the theme code 5F045 by clicking to see the details of the theme code 5F045 (step 112), the viewpoint counting means 10E counts 2-digit viewpoint symbols, which is subsequent to the theme code 5F045 (i.e., the sixth and seventh digits of the 9-digit F-term data) (step 114). After that, the control means 10A combines the values counted in step 114 with corresponding titles of viewpoints read from the theme code storing means 10G to list the combined data sequentially from the largest count value, thereby displaying the viewpoint symbols together with their titles on the display means 14 in the descending order of the frequency of occurrence of the viewpoints (step 116). In the case of the above-mentioned document, data shown in Fig. 4 are displayed on part of the display screen. (AD, EE,...) stands for viewpoints.

Thus interesting one of the viewpoints can be selected from the screen shown in Fig. 4. Suppose that 7-digit F-term 5F045AD having the most frequently appearing viewpoint is selected (step 118). In this case, six F-terms lower in the level of hierarchy than the viewpoint selected are (underlined and) displayed. Then respective titles of the F-terms are read from the theme code storing means 10G, and each level of hierarchy is determined by the F-term hierarchy determining means 10H so that data shown in Fig. 5 will be displayed on part of the display screen (step 120). The F-terms underlined here indicate that they are added to the patent document concerned. The last 2-digits (09, 10, 11,...) of the respective F-term data is a symbol of hierarchically lower subdivision of the viewpoint symbol [AD].

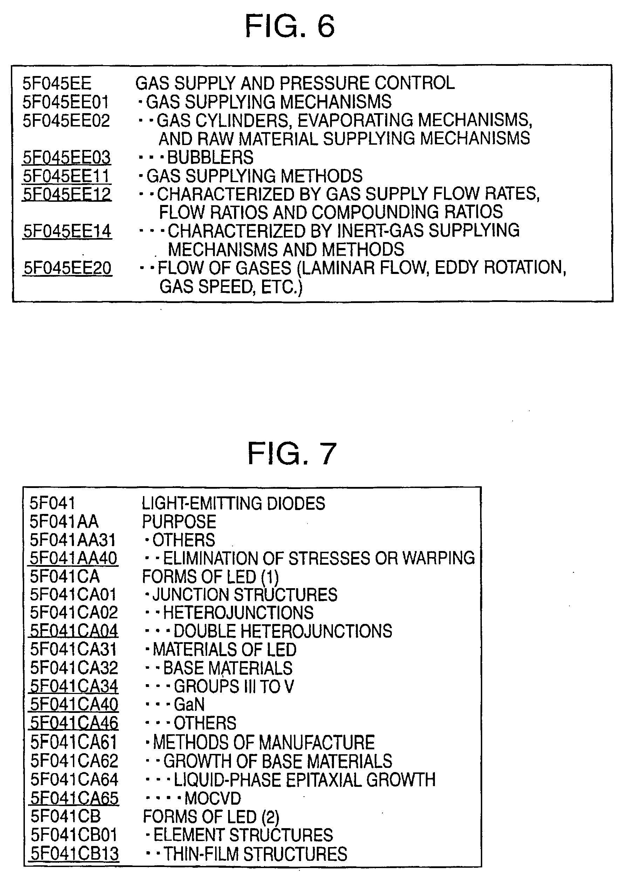

Next, when the operator selects the next 7-digit F-term 5F045EE (step 118) having the viewpoint EE, data shown in Fig. 6 are displayed on part of the display screen (step 120). In this case, not only underlined F-terms but also F-terms higher in the level of hierarchy than the underlined F-terms are displayed together (where the F-terms not added to the patent document are not underlined). For example, three dots are added to the F-term 5F045EE03, so that F-terms with a dot or two dots indicative of higher hierarchies added thereto are placed above the F-term concerned and displayed in this order.

As discussed above, any interesting viewpoint can be clicked to see the presence or absence of classifications (F-terms) suitable for target research.

On the other hand, the patent document has seven F-term data belonging to the theme code 5F041 (Fig.3). With respect to this theme code, it is therefore preferable that all the F-term data should be displayed on the same display screen together with F-terms higher in the level of hierarchy than the F-term data concerned. In this case, an "all F-term selection" key may also displayed on the screen which displays the theme codes as shown in Fig. 3. The operator may click "all F-term selection" key and select the theme code 5F041, so that all, F-term data belonging the theme code 5F041 are displayed on the display means 14 as seen in Fig. 7 (step 124 of Fig. 2).

It is also preferable that the "F-term List" or the "F-term Explanation" temporarily stored in the F-term storing means 10G can be read and displayed. For example, the item "Target of Document Analysis" in the "F-term Explanation" for the theme code 5F045 suggests that "an embodiment (or all embodiments if any) described in the specification and accompanying drawings is targeted on document analysis, omitting the prior art as the target of document analysis." Since the operator can know from the "F-term Explanation" that the F-term data added to the patent document are targeted on all technologies described in the document except the prior art, the "F-term Explanation" is important to the patent document search.

As described above and according to the present invention, classificcation symbol(s) defined by multi-viewpoint patent classification added to each patent document and higher hierarchical classification symbol(s) can be displayed together with their titles. Therefore, the contents of the patent document can be understood from many viewpoints, which makes it possible to grasp the contents of the patent document precisely and quickly without reading the entire specification. This also makes it possible to easily and quickly determine whether the patent document contains technical subjects to be examined or studied, and hence improve the efficiency of literature surveys. Further, use of F-term data as multi-viewpoint patent classifications has the advantage of being capable of grasping the contents of the patent document described in the "Embodiment(s)" or "the subject matter described in the entire specification" in addition to those described in the "Claims."

In the case the theme codes of each of the multi-viewpoint patent classifications are displayed together with their title, the theme codes or the viewpoints may be listed and output in the descending order of the frequency of their occurrence, which is also advantageous to grasp the contents of the document.

## Claims

1. A method for displaying the classification of a patent document to which multi-viewpoint patent classifications are added, comprising the steps of:
(a) retrieving the multi-viewpoint patent classifications added to the patent document;
(b) using a database storing a multi-viewpoint patent classification table to read out multi-viewpoint patent classifications higher in hierarchy than each of the multi-viewpoint patent classifications retrieved; and
(c) displaying, together with their titles, at least either the multi-viewpoint patent classifications retrieved or the multi-viewpoint patent classifications higher in hierarchy than each of the multi-viewpoint patent classifications retrieved.

2. The method according to claim 1, wherein each of the multi-viewpoint patent classifications includes theme codes, viewpoints and sub-divided viewpoints so that the theme codes of the multi-viewpoint patent classifications added to the patent document will be listed and output in the step (c) in the descending order of frequency of occurrence of the theme codes.

3. The method according to claim 2, wherein the theme codes and viewpoints contained in each theme code are listed and output in the descending order of the frequency of occurrence of the viewpoints.

4. An apparatus for displaying the classification of a patent document to which multi-viewpoint patent classifications are added, including
a multi-viewpoint patent classification database storing a multi-viewpoint classification table, a patent document database storing the patent document to which the multi-viewpoint patent classifications are added, input means, display means and a CPU, said CPU comprising:
document retrieval means for retrieving the patent document in accordance with instructions from said input means to control document-specific classification storing means to store the multi-viewpoint patent classifications added to the patent document retrieved;
classification retrieval means for reading out, together with their titles, the multi-viewpoint patent classifications added to the patent document retrieved and higher levels of hierarchy to control classification storing means to store the read data;
hierarchy of classification determining means for determining the level of each of the multi-viewpoint patent classifications added to the patent document; and
control means for controlling the entire operation while controlling said display means to display, together with their titles, at least either the multi-viewpoint patent classifications added to the patent document or the higher levels of hierarchy obtained by said hierarchy of classification determining means.

5. The apparatus according to claim 4, wherein said CPU further comprises theme code counting means for listing and outputting theme codes of each of the multi-viewpoint patent classifications, read out by said classification retrieval means, in the descending order of the frequency of occurrence of the theme codes.

6. The apparatus according to claim 4 or 5, wherein said CPU further comprises viewpoint counting means for listing and outputting viewpoints of each of the multi-viewpoint patent classifications, read out by said classification retrieval means, in the descending order of the frequency of occurrence of the viewpoints.

7. A recording medium for storing such a program as to enable a computer to execute the method according to any one of claims 1 to 3.

8. A program for enabling a computer to execute the method according to any one of claims 1 to 3.
